# EUROPÄISCHE PATENTSCHRIFT

(11) **EP 2 441 992 B1**
(45) Veröffentlichungstag und Bekanntmachung des Hinweises auf die Patenterteilung: **23.01.2013**
(21) Anmeldenummer: 10013510.2
(22) Anmeldetag: 11.10.2010
(51) Int. Cl.: F16K 11/044

(54) **Hydraulik-Sitzventil**
Hydraulic seat valve
Soupape de siège hydraulique

(43) Veröffentlichungstag der Anmeldung: 18.04.2012
(73) Patentinhaber: HAWE Hydraulik SE, 81673 München (DE)
(72) Erfinder: Neumair, Georg, 85402 Thalhausen (DE); Zwingler, Engelbert, 83629 Feldkirchen-Westerham (DE)
(74) Vertreter: Grünecker, Kinkeldey, Stockmair & Schwanhäusser

(56) Entgegenhaltungen:
- EP-A2- 1 801 473
- US-A1- 2008 072 978

## Beschreibung

Die Erfindung betrifft ein Hydraulik-Sitzventil der im Oberbegriff des Patentanspruchs 1 angegebenen Art.

In hydraulischen Steuerungen, z.B. für Werkzeugmaschinen, Strom-Trennschaltvorrichtun-gen, Hubmodulen, portablen Werkzeugen, und dgl., werden zunehmend Sitzventile als 2/2- oder 3/2-Wegeventile verwendet, deren leckagefreie Absperrstellung den wichtigen Vorteil einer Langzeit-Druckaufrechterhaltung bzw. keines Druckverlustes bietet. Häufig wird die ordnungsgemäße Funktion des Sitzventils, z.B. die Absperrstellung, elektrisch oder elektronisch überwacht. Alternativ oder additiv wird ferner bei einem 3/2-Wege-Sitzventil ein möglichst verlustarmer Schaltvorgang verlangt, um z.B. eine an der Versorgungsseite vorgesehene Druckquelle, wie eine abschaltbare Pumpe mit geringer Förderleistung nicht unzweckmäßig oft ein- und ausschalten zu müssen bzw. einen Druckspeicher nicht unzweckmäßig oft aufladen zu müssen. Beide Anforderungen sind jedoch bei Sitzventilen, unabhängig davon, ob alternativ oder additiv, gleichermaßen schwierig zu erfüllen. Die Positionsüberwachung beispielsweise der Absperrstellung über einen mit dem Ventilkegel gekoppelten Positionssensor ist deshalb schwierig, weil der Schaltpunkt des Positionssensors kaum exakt genug auf die innerhalb weniger µm des Ventilkegelhubes liegende Absperrstellung einzujustieren ist. Denn in der Kopplung zwischen dem Ventilkegel und dem zu montierenden Positionssensor addieren oder subtrahieren sich Fertigungstoleranzen, die, z.B. in einer Bauserie, Fluktuationen der Abstimmung zwischen dem Signal des Positionssensors und der Absperrstellung des Ventilskegels erzeugen. Bei einem 3/2-Wegesitzventil birgt ferner der Schaltvorgang vorübergehend die Gefahr, alle drei Anschlüsse miteinander zu verbinden, was beträchtlichen Verlust von der Seite des höchsten Druckbereiches bedingt. Es besteht deshalb erheblicher Bedarf, diese mit dem Vorteil der leckagefreien Absperrstellung gepaarten Nachteile von Hydraulik-Sitzventilen zu vermeiden.

Andererseits werden in hydraulischen Steuerungen Mehrwege-Schieberventile (z.B. US 2008/0072978 A1) verwendet, deren Vorteile eine feinfühlige Mengenregelung, eine einfachere elektrische Funktionsüberwachung und verlustarme Schaltvorgänge sind. Der Schieberkolben eines Schieberventils läuft mit einer Schieberpassung in der Gehäusebohrung. Die Schieberpassung ist so eng gewählt, dass der Schieberkolben leichtgängig genug verstellbar bleibt. Nachteile des Schieberventils sind jedoch höhere Kosten und unvermeidbare permanente Leckagen beim Schaltvorgang und in jeder Schaltstellung. Speziell die permanenten Leckagen sind in vielen Einsatzfällen nicht zu tolerieren, in denen es auf eine Langzeit-Druckaufrechterhaltung ankommt.

Bei einem gattungsgemäßen Hydraulik-Sitzventil gemäß EP 1 801 473 A sind angrenzend an die beiden Dichtringflächen bundförmige Überdeckungsabschnitte am Ventilkegel vorgesehen, deren jeder mit der Innenwand eines Sitzes einen Ringspalt definiert, um über einen vorbestimmten Teilabschnitt des vollen Abhebehubs aus der jeweiligen Absperrstellung zunächst einen Durchströmquerschnitt von einem Hochdruckbereich zu einem Niederdruckbereich freizugeben und diesen konstant zu halten. Dieser Durchströmquerschnitt ist kleiner als der maximale Öffnungsquerschnitt, der erst dann freigegeben wird, wenn der Überdeckungsabschnitt aus dem Sitz austritt. So sollen durch das Abheben entstehende Druckstöße vermieden werden. Der Überdeckungsabschnitt weist einen Außendurchmesser auf, der vergleichsweise wenig kleiner ist als der Innendurchmesser der Innenwand des Sitzes. Der Hochdruckbereich ist an eine Pumpe und an einen Hochdruckspeicher angeschlossen. Der konstant gehaltene Durchströmquerschnitt ist so bemessen, dass im Niederdruckbereich zunächst kein Druckaufbau von der Seite des Hochdruckbereiches her erfolgt. Der Abstand zwischen den beiden Sitzen und der Abstand zwischen den voneinander abgewandten Enden der beiden Überdeckungsabschnitte sind in diesem 3/2-Wegesitzventil so aufeinander abgestimmt, dass in einer Zwischenstellung zwischen den beiden leckagenfreien Absperrstellungen beide Überdeckungsabschnitte außerhalb der Sitze liegen und dann alle drei Anschlüsse miteinander verbunden sind. Die Überdeckungsabschnitte haben aufgrund ihrer relativ großen axialen Breite eine deutliche Führungsfunktion für den Ventilkegel, die dessen erforderliche Leichtgängigkeit zumindest innerhalb des Teilbereiches beeinträchtigt, so dass wegen der großen axialen Breite der Überdeckungsabschnitte deren Passung im Sitz entsprechend weit zu wählen ist.

Bei dem aus DE 33 45 720 A bekannten Hydraulik-Sitzventil ist der Abstand zwischen den beiden Sitzen des 3/2-Wegesitzventils auf den Abstand zwischen den voneinander abgewandten Enden bundförmiger Überdeckungsabschnitte derart abgestimmt, dass eine positive Überdeckung definiert wird. Dies bedeutet, dass zu keiner Zeit alle drei Anschlüsse direkt miteinander verbunden sind, sondern das Ende des einen Überdeckungsabschnittes aus seinem zugeordneten Sitz erst dann austritt, wenn bereits das Ende des anderen Überdeckungsabschnittes in dessen zugeordneten Sitz eingetaucht ist.

Der Erfindung liegt die Aufgabe zugrunde, ein Hydraulik-Sitzventil zu schaffen, dessen Schaltvorgänge bzw. Funktionen zuverlässig überwachbar und/oder verlustarm durchführbar sind.

Die gestellte Aufgabe wird mit den Merkmalen des Patentanspruchs 1 gelöst.

Die Schieberpassung von maximal bis zu 15 µm, bezogen auf den Durchmesser, zwischen dem Überdeckungsabschnitt und der Innenwand des Sitzes dient nicht notwendigerweise zur Führung des Ventilkegels, sondern bildet zum zuverlässigeren Überwachen und/oder verlustarmen Durchführen von Schaltvorgängen des Hydraulik-Sitzventils über den vorbestimmten Teilabschnitt des vollen Abhebehubs vor dem Einstellen und nach dem Aufheben der leckagefreien Absperrstellung einen konstanten Strömungsquerschnitt möglichst geringer Abmessung. Dies erfolgt unabhängig davon, ob es sich um ein 2/2-oder 3/2-Wegesitzventil handelt. Im Hinblick auf die zuverlässige Überwachung des Schaltvorgangs mit einem Positionssensor wird nämlich die Kombination der leckagefreien Absperrstellung und der anfänglich wirksamen Schieberpassung dazu benutzt, den Schaltpunkt des Positionssensors konstruktiv einfach innerhalb des vorbestimmten Teilabschnittes des vollen Abhebehubs zu platzieren, in welchem nur der vorbestimmte Strömungsquerschnitt offen ist, und hierbei die wegen der engen Schieberpassung nur außerordentlich geringe Leckage bei der Positionsabtastung zu tolerieren. Dennoch wird das vom Positionssensor am Schaltpunkt gelieferte Signal als Anzeige beispielsweise für die Absperrstellung verwendet, indem vorausgesetzt wird, dass der Ventilkegel entweder die korrekte Absperrstellung einnehmen wird bzw. die volle Öffnungsstellung erreichen wird, wenn er bereits in einer Stellung ist, in der der vorbestimmte Strömungsquerschnitt offen ist und der Positionssensor anspricht. Der vorbestimmte Teilabschnitt ist ausreichend groß, um den Schaltpunkt korrekt einjustieren zu können, obwohl es in der Kopplung des Ventilkegels mit dem Positionssensor und im Montierbereich des Positionssensors unvermeidliche Fertigungstoleranzen geben kann, die sich summieren oder subtrahieren, aber den Schaltpunkt nicht aus dem vorbestimmten Teilabschnitt herausverlagern können. Obwohl diese Art der Überwachung einer Quasi-Absperrstellung die tatsächliche Absperrstellung außer Betracht lässt, ergibt sich so in der Praxis ausreichende Zuverlässigkeit der Überwachung. Aus der Kombination der leckagefreien Absperrstellung und der Schieberpassung von maximal 15 µm, bezogen auf den Durchmesser, resultiert ferner ein verlustarmer Schaltvorgang des Sitzventils, insbesondere in einer Ausbildung als 3/2-Wegesitzventil, da zumindest über den Teilabschnitt des vollen Abhebehubs und durch die enge Schieberpassung kein nennenswerter Verlust oder Druckabbau vom Hochdruckbereich in einen Niederdruckbereich stattfindet, und auf baulich einfache Weise sichergestellt werden kann, dass nach Durchfahren des Teilabschnittes und vollständiger Freigabe des Sitzes der Druck bzw. das Druckmittel nur in den Druckbereich eingespeist wird, der für diese Funktion gesteuert werden soll. So kann bei einem 3/2-Wegesitzventil mit Überdeckungsabschnitten bei beiden Dichtringflächen und einer positiven Überdeckung zwischen den Überdeckungsabschnitten und den Innenwänden beider Sitze mit Sicherheit ausgeschlossen werden, dass das Sitzventil eine Zwischenstellung einnimmt, in welcher alle drei Anschlüsse miteinander kommunizieren. Beim Druck bzw. Druckmittel im Hochdruckbereich entsteht somit kein nennenswerter Abfall oder Verlust. Die Schieberpassung von maximal etwa 15 µm über den Teilabschnitt des vollen Abhebe- oder Aufsetzhubs wird erfindungsgemäß genutzt, um sowohl wenigstens eine Absperrstellung zu überwachen als auch verlustarm zu schalten, oder nur, um zu überwachen oder verlustarm zu schalten.

Zweckmäßig wird die Schieberpassung bei aus Stahlkomponenten bestehendem Sitzventil mit maximal sogar nur etwa 12 µm, bezogen auf den Durchmesser, gewählt. Der Durchmesser der Innenwand des Sitzes kann beispielsweise in einem Bereich von 20 mm bis 30 mm liegen. Diese enge Schieberpassung stellt sicher, dass selbst bei niedrigen Temperaturen der Stahlkomponenten bzw. des Druckmittels oder bei unterschiedlichen Temperaturen keine die leckagefreie Absperrstellung gefährdende Klemmung des Ventilkegels in der Gehäusebohrung auftritt, und dennoch der über den Teilabschnitt konstante Strömungsquerschnitt so klein wie möglich ist.

Bei einer zweckmäßigen Ausführungsform beträgt die axiale Bundbreite des Überdeckungsabschnittes nur etwa 0,3 mm bis 3,0 mm. Diese Bundbreite ist einerseits gering genug, um eine Führungsfunktion des Überdeckungsabschnittes für den Ventilkegel zu vermeiden oder zu minimieren, ist andererseits zur maschinellen Bearbeitung gerade noch ausreichend groß.

Bei einer zweckmäßigen Ausführungsform sind im Sitzventil der Sitz und der Ventilkegel aus Stahl gearbeitet, wobei zumindest die Innenwand und der Überdeckungsabschnitt geschliffen sind, um dort mit geringem Bearbeitungsaufwand hohe Oberflächengüte zu erzielen.

Bei einer zweckmäßigen Ausführungsform ist das der Dichtringfläche abgewandte, den Teil-abschnitt definierende Ende des Überdeckungsabschnittes von der Dichtringfläche zwischen etwa 40 % bis 75 %, vorzugsweise etwa 60 %, des vollen Abhebehubs des Ventilkegels beabstandet. Aus dieser relativen Dimensionierung und der Schieberpassung von maximal bis zu 15 µm, vorzugsweise maximal etwa 12 µm, resultiert eine ausreichende Länge, um Schaltvorgänge zuverlässig überwachen zu können, d.h. den Schaltpunkt des Positionssensors bequem einjustieren zu können und/oder Schaltvorgänge verlustarm durchzuführen.

Bei einer zweckmäßigen Ausführungsform kann am Ventilkegel an der dem Überdeckungsabschnitt abgewandten Seite der Dichtringfläche ein nach außen vorstehender Hubhilfsflansch vorgesehen sein. Dieser Hubhilfsflansch unterstützt die Abhebebewegung des Ventilkegels z.B. aufgrund der Strömungsdynamik dann, wenn der Überdeckungsabschnitt aus dem Sitz ausgetreten ist und sich eine kräftige Strömung vom Hochdruckbereich zu einem Niederdruckbereich entwickelt und unterstützt auch die Schließbewegung. Der Hubhilfsflansch ist nur eine Option und nichtfunktionsnotwendig.

Unabhängig davon, ob ein 2/2- oder 3/2-Wegesitzventil vorliegt, kann es zweckmäßig sein, wenigstens zwei zumindest radial ineinander formschlüssig zentrierte, hülsenförmige Gehäuseeinsätze vorzusehen, von denen der den Sitz aufweisende Gehäuseeinsatz mit einer geschliffenen Innenpassfläche mit einem Passsitz auf einer geschliffenen Außenpassfläche eines Fortsatzes des anderen Gehäuseeinsatzes zentriert ist, derart, dass sich eine geschliffene Dichtführung im Fortsatz in Verlängerung einer die Innenwand des Sitzes bildenden, geschliffenen Passfläche erstreckt. Alle Passflächen sind koaxiale und parallele Zylinderflächen. Durch die über den Passsitz gegebene Zentrierung der beiden Gehäuseeinsätze läuft der im Gehäuseeinsatz mit dem Fortsatz geführte Ventilkegel mit seinem Überdeckungsabschnitt in präziser Ausrichtung auf den Sitz. Als weiterer Vorteil lässt sich zumindest der den Sitz aufweisende Gehäuseeinsatz in einer Aufspannung durchgehend an den Passflächen mit einem einfachen Schleifwerkzeug schleifen. Dies gilt auch für den anderen Gehäuseeinsatz, so dass insgesamt der Bearbeitungsaufwand der Gehäuseeinsätze im Hinblick auf einen sauber zentrierten Lauf des Ventilkegels gering ist.

Die Zentrierung kann noch intensiviert werden, wenn die Gehäuseeinsätze mit an die Innen- und Außenpassflächen angrenzenden geschliffenen radialen Passflächen aneinandergepresst sind. Auch diese Passflächen können gegebenenfalls in derselben Aufspannposition mit den Zylinderflächen geschliffen werden.

Ferner ermöglicht dieses Zentrierungskonzept, aus den Gehäuseeinsätzen und dem eingesetzten Ventilkegel eine Ventileinsatz-Baueinheit des Sitzventils vorzufertigen, die dann bequem in einer Gehäusebohrung einer Hydraulikkomponente oder eines Blocks montiert werden kann.

Bei einer zweckmäßigen Ausführungsform eines 2/2- oder 3/2-Wegesitzventils ist der Ventilkegel mit wenigstens einem elektronischen oder elektrischen Positionsmelder bewegungs-übertragend gekoppelt, dessen eine Quasi-Absperrstellung repräsentierender Schaltpunkt innerhalb des vorbestimmten Teilabschnitts des vollen Abhebehubs einjustiert ist, d.h. solange der Überdeckungsabschnitt mit der Schieberpassung zuverlässig den konstanten Durchströmquerschnitt mit der Innenwand des Sitzes begrenzt. Dieser bewusst eingegangene Kompromiss führt in der Praxis zu ausreichend hoher Überwachungspräzision der Absperrstellung, obwohl nur der Teilabschnitt des vollen Abhebehubs für die Platzierung des Schaltpunktes genutzt wird und dieser nicht mit extremem Aufwand an die tatsächliche leckagefreie Absperrstellung gelegt wird. Der Positionssensor kann einen direkt mechanisch betätigten elektrischen Kontakt aufweisen, oder kann ein induktiver oder magnetoresistiver Sensor, oder ein Reed-Schalter oder ein Hall-Sensor sein, der mit seinem Signal einer übergeordneten Steuerung meldet, dass eine Quasi-Absperrstellung erreicht und/oder aufgegeben wurde bzw. vorliegt.

Eine weitere zweckmäßige Ausführungsform des als 3/2-Wegesitzventil ausgebildeten Sitzventils weist zwei Sitze und am Ventilkegel zwei Dichtringflächen auf. Am Ventilkegel ist jeder Dichtringfläche ein Überdeckungsabschnitt mit Schieberpassung in der Innenwand des Sitzes zugeordnet. Die beiden Überdeckungsabschnitte definieren eine positive gegenseitige Überdeckung. Eine positive Überdeckung bedeutet, dass der eine Überdeckungsabschnitt erst dann aus dem ihm zugeordneten Sitz austritt, wenn der andere Überdeckungsabschnitt bereits in den ihm zugeordneten Sitz eintaucht. Die positive Überdeckung sichert einen verlustarmen Umschaltvorgang, d.h., die den Hochdruckbereich speisende Druckquelle, z.B. eine Pumpe mit geringer Fördermenge, braucht nicht unzweckmäßig oft ein- und ausgeschaltet zu werden, weil beim Umschaltvorgang keine nennenswerte Druckmittelmenge verlorengeht, bzw. ein vorgesehener Druckspeicher braucht nicht unzweckmäßig häufig geladen zu werden.

Bei einer zweckmäßigen Ausführungsform entspricht die positive Überdeckung der positiven Differenz zwischen der Summe des Zweifachen des Teilabschnittes zuzüglich der Länge zwischen den Dichtringflächen am Ventilkegel und dem Abstand zwischen den Sitzen im Gehäuse. In einem konkreten Ausführungsfall kann die positive Überdeckung bei einem Abstand zwischen den beiden Sitzen von etwa 27 mm etwa 0,8 mm bis 1,5 mm betragen, beispielsweise bei einem Durchmesser der Sitze von etwa 27 mm.

Ausführungsformen des Erfindungsgegenstandes werden anhand der Zeichnungen erläutert. Es zeigen:
- Fig. 1: in symbolischer Darstellung ein 2/2-Wegesitzventil mit zugeordnetem Positionssensor und zugeordneter Druckquelle,
- Fig. 2: in symbolischer Darstellung ein 3/2-Wegesitzventil,
- Fig. 3: einen Teil eines Axialschnittes des 2/2-Wege-Hydraulik-Sitzventils von Fig. 1, in einer Absperrstellung,
- Fig. 4: einen Teil eines Axialschnittes des 3/2-Wege-Hydraulik-Sitzventils von Fig. 2, in einer Absperrstellung,
- Fig. 5: eine andere Ausführungsform des 2/2-Wege-Hydraulik-Sitzventils von Fig. 1, in einer Durchgangsstellung, und
- Fig. 6: eine andere Ausführungsform des 3/2-Wege-Hydraulik-Sitzventils von Fig. 1, in einer Absperrstellung.

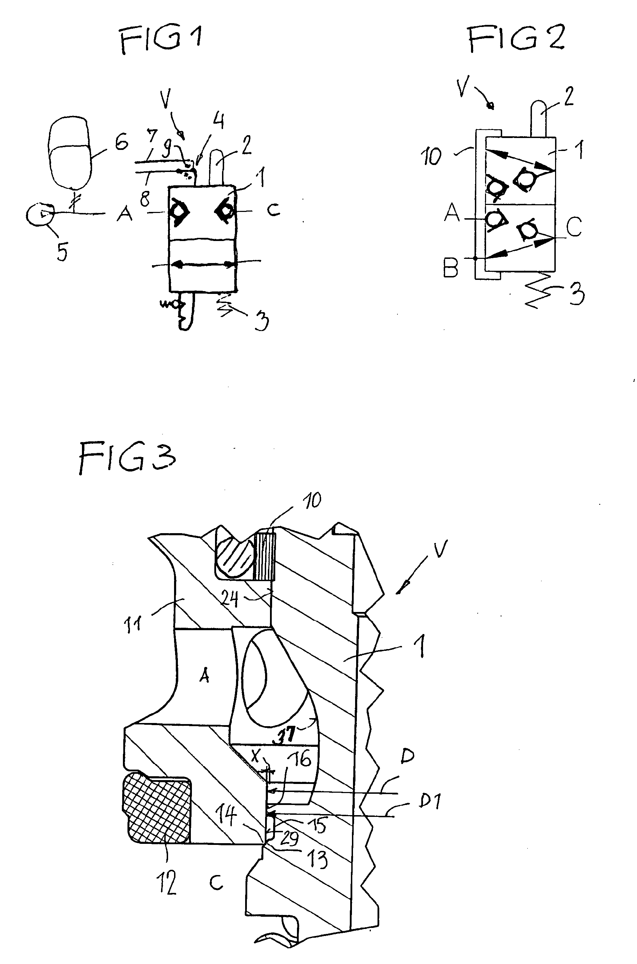

Die Fig. 1 und 2 zeigen in standardisierter symbolischer Darstellung Hydraulik-Sitzventile V. Das Hydraulik-Sitzventil in Fig. 1 ist ein 2/2-Wegesitzventil mit einem Ventilkegel 1, der durch ein Betätigungselement 2 zwischen einer leckagefreien Absperrstellung (oberer Teil der Symboldarstellung) und einer Durchgangsstellung (unterer Teil der Symboldarstellung) umschaltbar und zwischen zwei Wegen von einem Anschluss A zu einem Anschluss C verschaltet ist. Das Betätigungselement 2 kann manuell oder hydraulisch oder magnetisch und, beispielsweise, gegen eine Rückstellfeder 3 wirken. Das Hydraulik-Sitzventil 1 könnte mit einer selbsthaltenden Verrastung ausgestattet sein (nicht gezeigt). Der Anschluss A ist an eine Druckquelle angeschlossen, beispielsweise eine Pumpe 5 und/oder einen Druckspeicher 6. Bei der Pumpe 5 kann es sich um eine Konstantpumpe mit geringer Fördermenge handeln. Ferner ist in Fig. 1 dem Hydraulik-Sitzventil V ein Positionssensor 4 zugeordnet, der die Absperrstellung oder das Aufgeben der Absperrstellung an eine nicht gezeigte, übergeordnete Steuerung meldet. Der Positionssensor 4 kann einen elektrischen Kontakt aufweisen, der zwischen Leitungen 7, 8 am Schaltpunkt 9 eine Verbindung herstellt oder löst. Alternativ könnte der Positionssensor 4 ein Näherungsschalter, ein induktiver oder magnetoresistiver Schalter, ein Reed-Schalter oder ein Hall-Sensor oder dgl. sein.

Das Hydraulik-Sitzventil V in Fig. 2 ist ein 3/2-Wegesitzventil mit den drei Wegen entsprechenden Anschlüssen A, B und C. Das Hydraulik-Sitzventil V ist umschaltbar zwischen einer Durchgangsstellung zwischen den Anschlüssen A und C bei gleichzeitig leckagefreier Absperrstellung zwischen den Anschlüssen C und B, und einer Durchgangsstellung zwischen den Wegen B und C bei gleichzeitiger leckagefreier Absperrstellung zwischen den Anschlüssen C und A. Mit dem Anschluss B kann gegebenenfalls eine Leckage- und/oder Druckausgleichsverbindung 10 verbunden sein, die beide Enden des Ventilkegels 1 entlastet. Auch in Fig. 2 könnte eine Überwachung zumindest einer Absperrstellung vorgesehen sein (nicht gezeigt).

Die Hydraulik-Sitzventile V der Fig. 1 und 2 sind beispielsweise mit aus Stahl gearbeiteten Komponenten gebildet, obwohl gegebenenfalls auch Leichtmetall oder eine Leichtmetalllegierung oder sogar Kunststoff in Frage kämen.

Fig. 3 verdeutlicht den Innenaufbau-des 2/2-Wege-Hydraulik-Sitzventils V von Fig. 1 in der leckagefreien Absperrstellung. Der Ventilkegel 1 ist in einem Gehäuseeinsatz 11, beispielsweise mittels einer Dichtung 10, in einer geschliffenen Innenbohrung 24 linear geführt. Der Gehäuseeinsatz 11 kann mit einer Dichtung 12 in eine nicht gezeigte Innenbohrung eines Blocks oder einer anderen Hydraulikkomponente eingesetzt werden, wobei die Dichtung 12 zwischen dem Anschluss A und dem Anschluss C abdichtet. Am Ventilkegel 1 ist eine hier konische (alternativ sphärische oder gerade oder radiale) Dichtringfläche 13 angeformt, die einen größeren Außendurchmesser als einen Innendurchmesser D eines im Gehäuseeinsatz 11 geformten Sitzes 14 (eine scharfe oder konisch abgefaste Kante) besitzt. Die Lagen von Dichtringfläche 13 und Kante im Sitz 14 könnten am Ventilkegel 1 und Gehäuseeinsatz 11 umgekehrt wie gezeigt gewählt werden. An die Dichtringfläche 13 schließt sich in Richtung zum Anschluss A eine umlaufende Nut 15 an, die zu einem bundförmigen Überdeckungsabschnitt 16 führt, der eine kreiszylindrische Außenumfangsfläche mit einem Außendurchmesser D1 besitzt. An das Ende des Überdeckungsabschnittes 16 schließt sich eine gerundete Einschnürung 37 zum Anschluss A an. Der Sitz 14 hat beispielsweise einen Durchmesser D von etwa 27 mm. Zwischen dem Überdeckungsabschnitt 16 und der Innenwand des Sitzes 14 ist eine Schieberpassung X von maximal etwa 15 µm vorgesehen, vorzugsweise von etwa maximal 12 µm, bezogen auf die Durchmesser D, D1.

Die in Fig. 3 gezeigte Absperrstellung wird beispielsweise durch die in Fig. 1 gezeigte Rückstellfeder 3 hergestellt und ist gegebenenfalls verrastet. Die Anschlüsse A, C sind leckagefrei voneinander getrennt. Dies bedeutet, dass der Druck der Druckquelle (Pumpe 5 und/oder Druckspeicher 6) am Anschluss A über lange Zeit gehalten wird, selbst wenn im Anschluss C kein oder wesentlich niedriger Druck herrscht.

Wird in der in Fig. 3 gezeigten Absperrstellung eine Kraft auf das Betätigungselement 2 ausgeübt, dann wird zunächst die Dichtringfläche 13 vom Sitz 14 abgehoben, während sich der Überdeckungsabschnitt 16 im Sitz 14 nach unten bewegt, und einen konstanten Strömungsquerschnitt entsprechend der Schieberpassung X definiert, über den gegebenenfalls etwas Druckmittel vom Anschluss A zum Anschluss C leckt. Da die Schieberpassung X sehr eng ist, entsteht kein nennenswerter Druckabfall, so dass zunächst weder die Pumpe 5 eingeschaltet zu werden braucht, noch der aufgeladene Druckspeicher 6, falls vorhanden, spürbar entladen wird. Der bis zum Austreten des Endes des Überdeckungsabschnittes 16 aus dem Sitz 14 nutzbare Teilabschnitt des vollen Abhebehubs des Ventilkegels 1 vom Sitz 14 bedingt keine Veränderung der gegebenenfalls auftretenden Leckage, bietet jedoch die Möglichkeit, den Schaltpunkt 9 des Positionssensors 4 trotz unvermeidbarer Fertigungstoleranzen in der Kopplung zwischen dem Ventilkegel 1 und dem Positionssensor 4 präzise innerhalb dieses Teilabschnitts, gegebenenfalls ganz nahe beim Sitz 14, zu positionieren.

Sobald das Ende des Überdeckungsabschnittes 16 vollständig aus dem Sitz 14 ausgetreten ist, wird der Strömungsquerschnitt progressiv vergrößert, bis schließlich im Anschluss C der gleiche Druck herrscht wie im Anschluss A.

Wird das Betätigungselement 2 nicht mehr betätigt, dann stellt die Rückstellfeder 3 den Ventilkegel 1 wieder in die Stellung gemäß Fig. 3 zurück (leckagefreie Absperrstellung), wobei zunächst der Überdeckungsabschnitt 16 in den Sitz 14 eintaucht, und der konstanten Strömungsquerschnitt so lange wirkt, bis die Dichtringfläche 13 auf den Sitz 14 aufgesetzt ist.

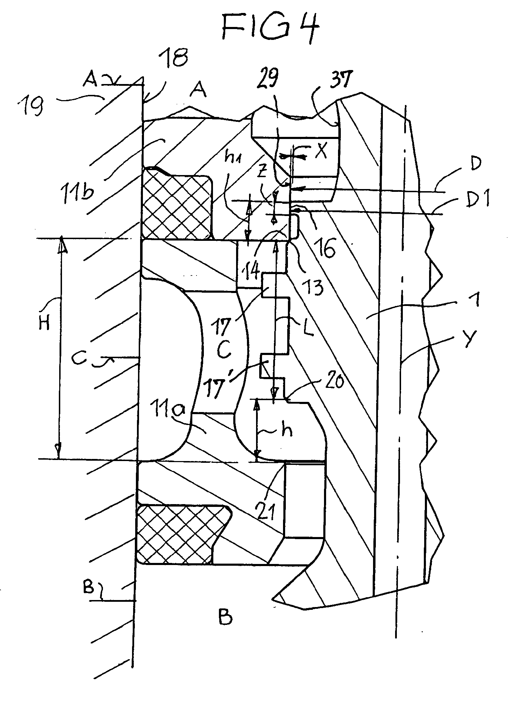

Fig. 4 verdeutlicht den Innenaufbau des 3/2-Wege-Hydraulik-Sitzventils V von Fig. 2 in der Absperrstellung, wobei in dieser Ausführungsform der Überdeckungsabschnitt 16 nur bei der Dichtringfläche 13 am Ventilkegel 1 vorgesehen ist, während bei einer zweiten Dichtringfläche 20, die mit einem zweiten Sitz 21 zusammenarbeitet, ein Überdeckungsabschnitt fehlt. In dieser Ausführungsform sind zwei Gehäuseeinsätze 11 a und 11 b vorgesehen, die in eine Innenbohrung 18 eines Blocks oder Gehäuses 19 eingesetzt sind, in welchem die Anschlüsse A, B und C vorgesehen sind. In der gezeigten Absperrstellung zwischen der Dichtringfläche 13 und dem Sitz 14 arbeitet der Überdeckungsabschnitt 16 mit einer geschliffenen Innenwand 29 im Gehäuseeinsatz 11b mit der Schieberpassung X zusammen.

Die axiale (Mittelachse Y) Breite Z des Überdeckungsabschnittes liegt bei etwa 0,4 mm, könnte aber auch etwas größer sein, vorzugsweise bis etwa 2,0 mm. Die Schieberpassung X beträgt hier beispielsweise 10 µm bis 12 µm, wobei auch der Außenumfang des Überdeckungsabschnittes 16 geschliffen ist. Der Teilabschnitt h1 des vollen Abhebehubs h des Ventilkegels 1 braucht, z.B. zur bequemen Platzierung des Schaltpunktes eines Positionssensors, nur etwa 0,9 mm, d.h. einen Bruchteil des vollen Abhebehubs h betragen. Zwischen den beiden Dichtringflächen 20, 13 liegt ein Abstand L vor, der um den vollen Abhebehub h kürzer ist als der Abstand H zwischen den beiden Sitzen 14, 21. Der Sitz 21 ist im Gehäuseeinsatz 11a geformt. Dank der zwei Gehäuseeinsätze 11a, 11b lässt den Ventilkegel 1 mit seinem angrenzend an die beiden Dichtringflächen 13, 20 größeren Außendurchmesser zwischen den Sitzen 14, 21 montieren.

Bei dieser Ausführungsform ist ferner (als Option) angrenzend an und im Abstand von der jeweiligen Dichtringfläche 13, 20 je ein nach außen vortretender Hubhilfsflansch 17, 17' vorgesehen, der dann aufgrund der Strömungsdynamik die Hubbewegung des Ventilkegels 1 unterstützt, wenn der Sitz 14 bzw. 21 freigegeben worden ist.

Der Überdeckungsabschnitt 16 stellt sicher, dass über den Teilabschnitt h1 kein nennenswerter Druckabbau zwischen den Anschlüssen A und C stattfindet bzw. keine nennenswerte Druckmittelmenge strömt, sondern erst dann, wenn der Überdeckungsabschnitt 16 aus dem Sitz 14 voll ausgetreten ist.

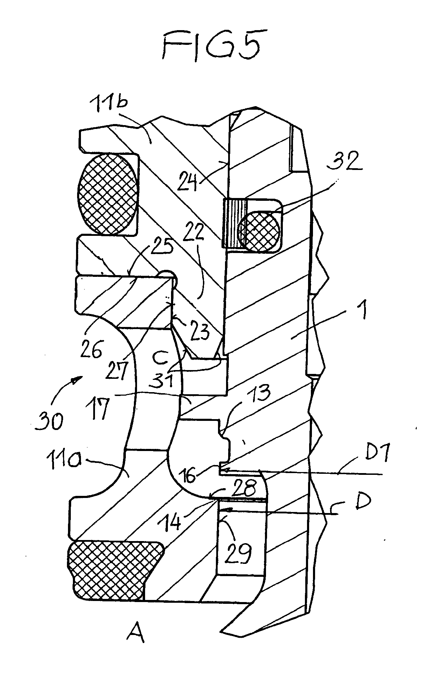

Fig. 5 verdeutlicht in der Schnittdarstellung ein anderes Konzept einer formschlüssigen Zentrierung der Gehäuseeinsätze 11 a, 11 b bei einem 2/2-Wege-Hydraulik-Sitzventil V beispielsweise ähnlich dem der Fig. 1. Dieses Konzept könnte jedoch auch bei einem 3/2-Wege-Hydraulik-Sitzventil V ähnlich dem der Fig. 2 verwendet werden.

Konkret ist hier in Fig. 5 der Ventilkegel 1 in Fig. 5 mit einer Dichtung 32 in der geschliffenen Innenbohrung 24 des Gehäuseeinsatzes 11b geführt, wobei, zweckmäßig, der Ventilkegel 1 in diesem Bereich außenseitig ebenfalls geschliffen ist. Der Gehäuseeinsatz 11b besitzt einen Vorsprung 22 mit einer geschliffenen Außenpassfläche 23, auf die eine geschliffene Innenpassfläche 27 des Gehäuseeinsatzes 11a mit einem Passsitz aufgepresst ist. Ferner sind radiale, geschliffene Passflächen 25, 26 der Gehäuseeinsätze 11a und 11b gegeneinandergepresst. Bei diesem Konzept ist es möglich, jeden Gehäuseeinsatz 11a, 11b, insbesondere den Gehäuseeinsatz 11a, in einer Aufspannstellung in einer Werkzeugmaschine in einem Ablauf ohne umzuspannen an allen Passflächen zu schleifen, beispielsweise ausgehend von der radialen Passfläche 26 über die Innenpassfläche 27, die eine radiale Passfläche 28 beim Sitz 14 und die Innenwand 29 des Sitzes 14. Ferner ergibt sich durch die formschlüssige Zentrierung der Gehäuseeinsätze 11a, 11 b und die Möglichkeit, die Schleifvorgänge in einer Aufspannposition durchzuführen, auch an dem Gehäuseeinsatz 11b. Daraus resultiert ein einwandfrei zentrierter Lauf des Ventilkegels 11 in Bezug auf den Sitz 14 und die Innenwand 29. Zur Vereinfachung der Montage können am Fortsatz 22 abgeschrägte Flächen 31 geformt sein. Die Gehäuseeinsätze 11a und 11b können mit montiertem Ventilkegel 1 als vorgefertigte Gehäuseeinsatz-Baueinheit 30 vorbereitet und einfach montiert werden. Zwischen dem Überdeckungsabschnitt 16 mit dem Außendurchmesser D1 und der Innenwand 29 im Sitz 14 mit dem Innendurchmesser D ist auch hier die Schieberpassung X gewählt, die den konstanten engen Durchströmquerschnitt zwischen den Anschlüssen A und C definiert, sobald die Dichtringfläche vom Sitz abgehoben ist.

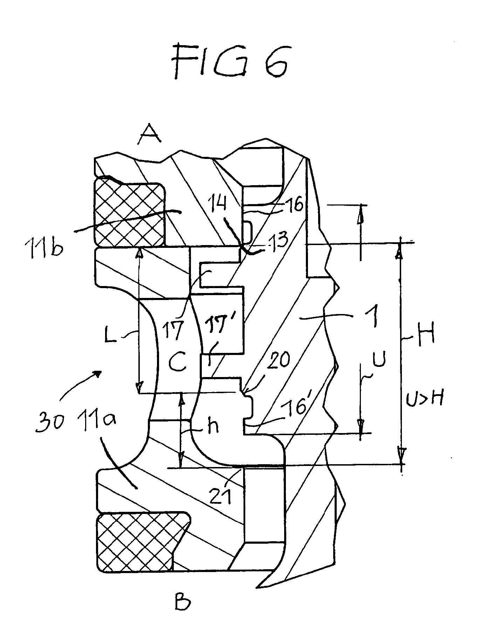

Fig. 6 verdeutlicht in einer Schnittdarstellung eine andere Ausführungsform eines 3/2-Wege-Hydraulik-Sitzventils V ähnlich dem der Fig. 2. Im Unterschied z.B. zu Fig. 4 ist beiden Dichtringflächen 13, 20 jeweils ein Überdeckungsabschnitt 16, 16' zugeordnet, der mit seinem zugeordneten Sitz 14 bzw. 21 bzw. dessen Innenwand jeweils mit einer Schieberpassung X zusammenarbeitet. Hierbei ist der Abstand H zwischen den Sitzen 14, 21 (die Summe der Länge L zwischen den Dichtringflächen 13, 20 und des vollen Abhebehubs h) so auf das Maß U zwischen den Enden der beiden Überdeckungsabschnitte 16, 16' abgestimmt, dass sich insgesamt eine positive Überdeckung ergibt, d.h., dass das Maß U geringfügig länger sein kann als das Maß H, beispielsweise um etwa 1,5 mm. Die positive Überdeckung bedeutet hier, dass der Überdeckungsabschnitt 16 erst dann aus dem Sitz 14 austritt, wenn der Überdeckungsabschnitt 16' bereits in den Sitz 21 eintaucht, so dass zu keiner Zeit zwischen allen Anschlüssen A, B, C gleichzeitig ein großer Durchströmquerschnitt frei ist. Die positive Überdeckung bedingt eine verlustarme Ventilfunktion bzw. einen verlustarmen Umschaltvorgang, da beispielsweise vom Hochdruckbereich des Anschlusses A kein Druckmittel in den Anschluss B strömt, wenn die Verbindung zwischen den Anschlüssen A und C hergestellt wird, und bis die Absperrstellung zwischen der Dichtringfläche 20 und dem Sitz 21 erreicht ist. In den Absperrstellungen ist entweder der Anschluss A leckagefrei gegenüber dem Anschluss C und dem Anschluss B isoliert, oder ist der Anschluss B leckagefrei von den Anschlüssen C und A isoliert. Als Option sind in Fig. 6 ferner Hubhilfsflansche 17, 17' beiden Dichtringflächen 13, 20 zugeordnet. Ein zusätzlicher Effekt der Hubhilfsflansche 17, 17' kann darin bestehen, dass sie zu höherer Sicherheit bei defektem, z.B. in einer Mittelstellung verbleibendem Hydraulik-Sitzventil eine Drosselung bewirken, so dass nur ein relativ kleiner Volumenstrom strömen kann.

## Patentansprüche

1. Hydraulik-Sitzventil (V), insbesondere 2/2- oder 3/2-Wegesitzventil, mit einem Gehäuse (19, 30), in dem in einer Gehäusebohrung (24, 29) ein Ventilkegel (1) mit mindestens einerr Dichtfläche (13, 20) in wenigstens einer leckagefreien Absperrstellung gegen einen Sitz (14, 21) im Gehäuse (19, 30) anlegbar und linear vom Sitz bis in eine voll geöffnete Durchgangsstellung abhebbar ist, und die Gehäusebohrung beiderseits des Sitzes (14, 21) mit Anschlüssen (A, B, C) unterschiedlicher Druckbereiche kommuniziert, wobei am Ventilkegel (1) im Anschluss an zumindest eine Dichtringfläche (13, 20) ein in der Absperrstellung in den Sitz eintauchender, bundförmiger Überdeckungsabschnitt (16, 16') vorgesehen ist, der einen gegenüber dem Innendurchmesser (D) des Sitzes kleineren Außendurchmesser (D1) aufweist und über einen vorbestimmten Teilabschnitt (h1) des vollen Abhebehubs (h) des vom Sitz abgehobenen Ventilkegels (1) einen konstanten Durchströmquerschnitt zwischen zwei Anschlüssen unterschiedlicher Druckbereiche begrenzt, **dadurch gekennzeichnet, dass** bezogen auf den Durchmesser zwischen dem Überdeckungsabschnitt (16, 16') und einer Innenwand (29) des Sitzes (14, 21) eine Schieberpassung (X) von maximal bis zu 15 µm vorgesehen ist.

2. Hydraulik-Sitzventil nach Anspruch 1, **dadurch gekennzeichnet, dass** die Schieberpassung (X) bei aus Stahlkomponenten bestehendem Sitzventil (V) bis zu etwa 12 µm beträgt.

3. Hydraulik-Sitzventil nach Anspruch 1, **dadurch gekennzeichnet, dass** die axiale Bundbreite (Z) des Überdeckungsabschnittes (16) etwa 0,3 mm bis 1,0 mm misst.

4. Hydraulik-Sitzventil nach Anspruch 1, **dadurch gekennzeichnet, dass** im Sitzventil (V) der Sitz (14, 21) und der Ventilkegel (1) aus Stahl gearbeitet und zumindest die Innenwand (24, 29) und der Überdeckungsabschnitt (16, 16') geschliffen sind.

5. Hydraulik-Sitzventil nach Anspruch 1, **dadurch gekennzeichnet, dass** das der Dichtringfläche (13) abgewandte, den Teilabschnitt (h1) definierende Ende des Überdeckungsabschnittes (16) von der Dichtringfläche zwischen etwa 40 % bis 75 % des vollen Abhebehubs (h) des Ventilkegels (1) und/oder vorzugsweise etwa 0,8 mm bis 1,5 mm beabstandet ist.

6. Hydraulik-Sitzventil nach wenigstens einem der vorhergehenden Ansprüche, **dadurch gekennzeichnet, dass** am Ventilkegel (1) an der dem Überdeckungsabschnitt (16, 16') abgewandten Seite der Dichtringfläche (13, 20) ein nach außen vorstehender Hubhilfsflansch (17, 17') vorgesehen ist.

7. Hydraulik-Sitzventil nach wenigstens einem der vorhergehenden Ansprüche, **dadurch gekennzeichnet, dass** wenigstens zwei zumindest radial ineinander formschlüssig zentrierte, hülsenförmige Gehäuseeinsätze (11 a, 11 b) vorgesehen sind, von denen einer den Sitz (14) und der andere als Teil der Gehäusebohrung (24) eine geschliffene Dichtführung für den Ventilkegel (1) aufweist, dass der eine, den Sitz (14) aufweisende Gehäuseeinsatz (11a) mit einer geschliffenen Innenpassfläche (27) mit einem Passsitz auf einer geschliffenen Außenpassfläche (23) eines Fortsatzes (22) des anderen Gehäuseeinsatzes (11 b) zentriert ist, dass sich die geschliffene Dichtführung im Fortsatz (22) in Verlängerung einer die Innenwand (29) des Sitzes bildenden, geschliffenen Passfläche erstreckt, und dass alle Passflächen beider Gehäuseeinsätze (11 a, 11 b) koaxiale, parallele Zylinderflächen sind.

8. Hydraulik-Sitzventil nach Anspruch 7, **dadurch gekennzeichnet, dass** die Gehäuseeinsätze (11a, 11b) mit an die Innen- und Außenpassflächen (23, 27) angrenzenden, radialen geschliffenen Passflächen (25, 26) aneinandergepresst sind.

9. Hydraulik-Sitzventil nach wenigstens einem der Ansprüche 1 bis 8, **dadurch gekennzeichnet, dass** die, vorzugsweise über den Fortsatz ineinander zentrierten, Gehäuseeinsätze (11a, 11b) mit dem Ventilkegel (1) eine Ventileinsatz-Baueinheit (30) des Sitzventils (V) bilden.

10. Hydraulik-Sitzventil nach wenigstens einem der vorhergehenden Ansprüche, **dadurch gekennzeichnet, dass** der Ventilkegel (1) des als 2/2- oder 3/2-Wegesitzventil ausgebildeten Sitzventils (V) mit wenigstens einem elektrischen oder elektronischen Positionsmelder (4) bewegungsübertragend gekoppelt ist, dessen eine Quasi-Absperrstellung repräsentierender Schaltpunkt innerhalb des vorbestimmten Teilabschnittes (h1) des vollen Abhebehubs (h) einjustiert ist, solange der Überdeckungsabschnitt (16, 16') mit der Schieberpassung (X) mit der Innenwand (24, 29) den konstanten Durchströmquerschnitt begrenzt.

11. Hydraulik-Sitzventil nach wenigstens einem der vorhergehenden Ansprüche, **dadurch gekennzeichnet, dass** das als 3/2-Wegesitzventil ausgebildete Sitzventil (V) zwei Sitze (14, 21) und am Ventilkegel (1) zwei Dichtringflächen (13, 20) jeweils zur Zusammenwirkung in einer Absperrstellung mit einem Sitz aufweist, dass am Ventilkegel (1) jeder Dichtringfläche (13, 20) ein Überdeckungsabschnitt (16, 16') mit Schieberpassung (X) zur Innenwand (29) des Sitzes (14, 21) zugeordnet ist, und dass die beiden Überdeckungsabschnitte (26, 26') eine positive gegenseitige Überdeckung (U>H) für den Ventilkegel (1) definieren.

12. Hydraulik-Sitzventil nach Anspruch 11, **dadurch gekennzeichnet, dass** die positive Überdeckung der positiven Differenz der Summe des Zweifachen des Teilabschnittes (h1) zuzüglich der Länge (L) zwischen den Dichtringflächen (13, 20) am Ventilkegel (1) und dem Abstand (H) zwischen den Sitzen (21, 14) im Gehäuse (19, 30) entspricht.

## Claims

1. Hydraulic seat valve (V), particularly 2/2 or 3/2 multi-way seat valve, comprising a housing (19, 30), within which in a housing bore (24, 29) a valve cone (1) is provided, which can be brought with at least one sealing surface (13, 20) in at least one leakage-free blocking position against a seat (14, 21) of the housing (19, 30) and can be lifted linearly from the seat into a fully opened through flow position, the housing bore communicating at both sides of the seat (14, 21) with ports (A, B, C) of different pressure ranges, wherein at the valve cone (1) in continuation with at least one sealing ring surface (13, 20) a land-shaped overlap section (16, 16') is provided which dives into the seat in the blocking position, which overlap section has a smaller outer diameter (D1) than the inner diameter (D) of the seat and is bounding a constant through flow cross-section between two ports of different pressure ranges within a predetermined partial section (h1) of the full lifting stroke (h) of the valve cone (1) when the valve cone (1) is lifted from the seat, **characterised in that** between the overlap section (16, 16') and an inner wall (29) of the seat (14, 21) a slider diameter tolerance (X) of maximally up to 15 µm is provided.

2. Hydraulic seat valve according to claim 1, **characterised in that** the slider tolerance (X) amounts to about 12 µm in the case that the seat valve (V) consists of steel components.

3. Hydraulic seat valve according to claim 1, **characterised in that** the axial width (Z) of the land of the overlap section (16) measures about 0.3 mm to 1.0 mm.

4. Hydraulic seat valve according to claim 1, **characterised in that** the seat (14, 21) and the valve cone (1) in the seat valve (V) are worked from steel, and that at least the inner wall (24, 29) and the overlap section (16, 16') are ground.

5. Hydraulic seat valve according to claim 1, **characterised in that** the end of the overlap section (16) remote from the sealing ring surface (13) and defining the partial section (h1) is spaced apart from the sealing ring surface between about 40% to 75% of the full lifting stroke (h) of the valve cone (1) and/or, preferably, about 0.8 mm to 1.5 mm.

6. Hydraulic seat valve according to at least one of the preceding claims, **characterised in that** an outwardly protruding auxiliary lifting flange (17, 17') is provided at the valve cone (1) at the side of the sealing ring surface (13, 20) remote from the overlap section (16, 16').

7. Hydraulic seat valve according to at least one of the preceding claims, **characterised in that** at least two housing inserts (11 a, 11 b) are provided, which are centred within each other radially and with a form-fit, of which one housing insert comprises the seat (14) and the other a ground sealing guide for the valve cone (1) as a part of the housing bore (24), that the one housing insert (11a) comprising the seat (14) is centred with a ground inner fitting surface (27) in a fitting seat on a ground outer fitting surface (23) of a projection (22) of the other housing insert (11b), that the ground sealing guide in the projections (22) extends in prolongation of a ground fitting surface forming the inner wall (29) of the seat, and that all fitting surfaces of both housing inserts (11 a, 11 b) are coaxial and parallel cylinder surfaces.

8. Hydraulic seat valve according to claim 7, **characterised in that** the housing inserts (11 a, 11 b) are pressed against each other with radial ground fitting surfaces (25, 26) located adjacent to the inner and outer fitting surfaces (23, 27).

9. Hydraulic seat valve according to at least one of claims 1 to 8, **characterised in that** the housing inserts (11a, 11b), which, preferably, are centred within each other via the projection, and the valve cone (1) form a valve insert structural unit (30) of the seat valve (V).

10. Hydraulic seat valve according to at least one of the preceding claims, **characterised in that** the valve cone (1) of the seat valve (V) designed as a 2/2 or 3/2 multi-way seat valve is coupled in motion transmitting fashion with at least one electric or electronic position indicator (4), the switching point of which representing a quasi-blocking position is adjusted within the predetermined partial section (h1) of the full lifting stroke (H), as long as the overlap section (16, 16') is bounding with the inner wall (24, 29) and the slider tolerance (X) a constant through flow cross-section.

11. Hydraulic seat valve according to at least one of the preceding claims, **characterised in that** the seat valve (V) designed as the 3/2 multi-way seat valve comprises two seats (14, 21) and two sealing ring surfaces (13, 20) at the valve cone (1) respectively for a coaction in a blocking position with one respective seat, that an overlap section (16, 16') having a slider tolerance (X) with respect to the inner wall (29) of the seat (14, 21) is associated to each sealing ring surface (13, 20) at the valve cone (1), and that both overlap sections (26, 26') define a positive mutual overlap (U>H) for the valve cone (1).

12. Hydraulic seat valve according to claim 11, **characterised in that** the positive overlap corresponds with the positive difference between the sum of the twofold of the partial section (h1) plus the length (L) between the sealing ring surfaces (13, 20) at the valve cone (1) and the distance (H) between the seats (21, 14) in the housing (19, 30).

## Revendications

1. Soupape hydraulique à siège (V), en particulier soupape à siège à 2/2 voies ou 3/2 voies, comprenant un corps (19, 30) dans lequel, dans un alésage de corps (24, 29), un cône de soupape (1) peut s'appliquer par au moins une portée de joint (13, 20), dans au moins une position d'arrêt sans fuite, contre un siège (14, 21) dans le corps (19, 30) et peut être décollé linéairement du siège jusque dans une position de passage totalement ouverte, et l'alésage de corps communique de part et d'autre du siège (14, 21) avec des raccords (A, B, C) de plages de pression différentes, une section de recouvrement (16, 16') en forme de collet, qui plonge dans le siège dans la position d'arrêt, étant prévue sur le cône de soupape (1) à la suite d'au moins une portée de joint annulaire (13, 20), laquelle section de recouvrement présente un diamètre extérieur (D1) plus petit que le diamètre intérieur (D) du siège et limite, sur une section partielle prédéfinie (h1) de la course totale (h) du cône de soupape (1) décollé du siège, une section transversale d'écoulement constante entre deux raccords de plages de pression différentes, **caractérisée en ce que**, rapporté au diamètre, un ajustage de coulissement (X) de jusqu'à 15 µm au maximum est prévu entre la section de recouvrement (16, 16') et une paroi intérieure (29) du siège (14, 21).

2. Soupape hydraulique à siège selon la revendication 1, **caractérisée en ce que** l'ajustage de coulissement (X), pour une soupape à siège (V) constituée de composants en acier, atteint jusqu'à environ 12 µm.

3. Soupape hydraulique à siège selon la revendication 1, **caractérisée en ce que** la largeur de collet axiale (Z) de la section de recouvrement (16) mesure environ 0,3 mm à 1,0 mm.

4. Soupape hydraulique à siège selon la revendication 1, **caractérisée en ce que**, dans la soupape à siège (V), le siège (14, 21) et le cône de soupape (1) sont usinés en acier et au moins la paroi intérieure (24, 29) et la section de recouvrement (16, 16') sont rectifiées.

5. Soupape hydraulique à siège selon la revendication 1, **caractérisée en ce que** l'extrémité, opposée à la portée de joint annulaire (13) et définissant la section partielle (h1), de la section de recouvrement (16) est distante de la portée de joint annulaire d'environ 40% à 75% de la course de levée totale (h) du cône de soupape (1) et/ou de préférence d'environ 0,8 mm à 1,5 mm.

6. Soupape hydraulique à siège selon l'une au moins des revendications précédentes, **caractérisée en ce qu'**il est prévu sur le cône de soupape (1), sur le côté de la portée de joint annulaire (13, 20) opposé à la section de recouvrement (16, 16'), une bride auxiliaire de levage (17, 17') en saillie vers l'extérieur.

7. Soupape hydraulique à siège selon l'une au moins des revendications précédentes, **caractérisée en ce que** sont prévues au moins deux garnitures de corps (11a, 11b) en forme de manchons, centrées au moins dans la direction radiale par coopération de forme mutuelle, dont l'une présente le siège (14) et l'autre, en tant que partie de l'alésage de corps (24), un guidage d'étanchéité rectifié pour le cône de soupape (1), que l'une des garnitures de corps (11a), présentant le siège (14), est centrée par une surface d'ajustage intérieure (27) rectifiée, avec un ajustage fin, sur une surface d'ajustage extérieure (23) rectifiée d'un prolongement (22) de l'autre garniture de corps (11b), que le guidage d'étanchéité rectifié s'étend dans le prolongement (22) en rallonge d'une surface d'ajustage rectifiée, formant la paroi intérieure (29) du siège, et que toutes les surfaces d'ajustage des deux garnitures de corps (11a, 11b) sont des surfaces cylindriques coaxiales, parallèles.

8. Soupape hydraulique à siège selon la revendication 7, **caractérisée en ce que** les garnitures de corps (11a, 11b) sont pressées l'une sur l'autre par des surfaces d'ajustage (25, 26) rectifiées radiales, limitrophes aux surfaces d'ajustage intérieures et extérieures (23, 27).

9. Soupape hydraulique à siège selon l'une au moins des revendications 1 à 8, **caractérisée en ce que** les garnitures de corps (11a, 11b), de préférence centrées mutuellement par l'intermédiaire du prolongement, forment avec le cône de soupape (1) un composant (30) de garniture de soupape de la soupape à siège (V).

10. Soupape hydraulique à siège selon l'une au moins des revendications précédentes, **caractérisée en ce que** le cône de soupape (1) de la soupape à siège (V), réalisée sous forme de soupape à siège à 2/2 voies ou 3/2 voies, est couplé en transmission de mouvement avec au moins un détecteur de position (4) électrique ou électronique, dont un point de commutation, représentatif d'une quasi-position d'arrêt, est réglé à l'intérieur de la section partielle (h1) prédéfinie de la course de levée totale (h), tant que la section de recouvrement (16, 16') limite par l'ajustage de coulissement (X) avec la paroi intérieure (24, 29) la section transversale d'écoulement constante.

11. Soupape hydraulique à siège selon l'une au moins des revendications précédentes, **caractérisée en ce que** la soupape à siège (V), réalisée sous forme de soupape à siège à 3/2 voies, présente deux sièges (14, 21) et, sur le cône de soupape (1), deux portées de joint annulaires (13, 20) pour coopérer respectivement dans une position d'arrêt avec un siège, que, sur le cône de soupape (1), une section de recouvrement (16, 16'), avec ajustage de coulissement (X) par rapport à la paroi intérieure (29) du siège (14, 21), est associée à chaque portée de joint annulaire (13, 20), et que les deux sections de recouvrement (26, 26') définissent un recouvrement positif mutuel (U > H) pour le cône de soupape (1).

12. Soupape hydraulique à siège selon la revendication 11, **caractérisée en ce que** le recouvrement positif correspond à la différence positive de la somme du double de la section partielle (h1) plus la longueur (L) entre les portées de joint annulaires (13, 20) sur le cône de soupape (1) et la distance (H) entre les sièges (21, 14) du corps (19, 30).
